# EUROPEAN PATENT APPLICATION

(11) **EP 4 711 837 A1**
(43) Date of publication of application: **18.03.2026**
(21) Application number: 24803407.6
(22) Date of filing: 26.04.2024
(51) Int. Cl.: G02B 27/28, G02F 1/09

(54) **OPTICAL ISOLATOR AND LASER IRRADIATION DEVICE**

(30) Priority: 10.05.2023 JP 2023077675
(71) Applicant: Nippon Electric Glass Co., Ltd., Otsu-shi, Shiga 520-8639 (JP)
(72) Inventor: FURUYAMA, Tadahito, Otsu-shi, Shiga 520-8639 (JP)
(74) Representative: Tetzner, Michael
(86) International application number: PCT/JP2024/016387
(87) International publication number: WO 2024/232294

(57) **Abstract**

Provided is an optical isolator that can reduce scattering of reflected return light in the interior of the housing and thus has excellent reliability. An optical isolator 1 includes: a first polarizer 2 provided on a light incidence side in a direction X of an optical axis; a second polarizer 3 provided on a light exit side in the direction X of the optical axis; a Faraday rotator 4 disposed between the first polarizer 2 and the second polarizer 3; and a housing 6 containing the first polarizer 2, the second polarizer 3, and the Faraday rotator 4, wherein the first polarizer 2 is configured that reflected return light A having transmitted the second polarizer 3 and the Faraday rotator 4 is reflected in a different direction from the direction X of the optical axis, and an absorbing member 5 that absorbs at least part of the reflected return light A is provided with an absorbing member 5 that absorbs at least part of the reflected return light A in an optical path of the reflected return light A having reflected in the different direction from the direction X of the optical axis.

## Description

### [Technical Field]

The present invention relates to optical isolators and laser irradiation devices in which the optical isolators are used.

### [Background Art]

Optical isolators are magneto-optic elements that propagate light in a single direction and block reflected return light. Optical isolators are used in laser irradiation devices for use in optical communication systems, laser processing systems, and so on.

Patent Literature 1 below discloses, as such an optical isolator, an optical isolator including a Faraday rotator and polarizers disposed at both end surfaces of the Faraday rotator in the direction of the optical axis. Such an optical isolator passes incident light through the polarizer located on the light entrance surface side to polarize it, then passes the light through the Faraday rotator to rotate the plane of the polarized light by 45°, then passes the light through the polarizer located on the light exit surface side, and then emits the light. Furthermore, when reflected return light reaches the light exit surface side, the reflected return light is polarized by the polarizer located on the light exit surface side, then passes through the Faraday rotator to rotate 45°, and then reaches the polarizer located on the light entrance surface side. At this time, the plane of this polarized light is orthogonal to the direction of polarization of transmitted light by the polarizer located on the light entrance surface side and, therefore, it is considered that the reflected return light can be eliminated without being emitted from the light entrance surface side.

### [Citation List]

### [Patent Literature]

[PTL 1]
JP-A-2003-322826

### [Summary of Invention]

### [Technical Problem]

In such an optical isolator as in Patent Literature 1, its components, including polarizers and a Faraday rotator, are used disposed in the interior of a housing. In this case, reflected return light having reached the polarizer on the light entrance surface side reflects at the polarizer on the light entrance surface side and, thus, the reflected return light reflected on this side may scatter in the interior of the housing to become stray light and have adverse effects on characteristics, such as isolation characteristics.

An object of the present invention is to provide an optical isolator and a laser irradiation device using the optical isolator, both of which can reduce scattering of reflected return light in the interior of the housing and thus have excellent reliability.

### [Solution to Problem]

A description will be given of respective aspects of an optical isolator and a laser irradiation device both of which can solve the above problem.

An optical isolator of aspect 1 in the present invention includes: a first polarizer provided on a light incidence side in a direction of an optical axis; a second polarizer provided on a light exit side in the direction of the optical axis; a Faraday rotator disposed between the first polarizer and the second polarizer; and a housing containing the first polarizer, the second polarizer, and the Faraday rotator, wherein the first polarizer is configured that reflected return light transmitted through the second polarizer and the Faraday rotator is reflected in a different direction from the direction of the optical axis, and an absorbing member that absorbs at least part of the reflected return light is provided in an optical path of the reflected return light having reflected in the different direction from the direction of the optical axis.

An optical isolator of aspect 2 is the optical isolator according to aspect 1, wherein the absorbing member is preferably disposed between the first polarizer and a wall of the housing in the optical path of the reflected return light.

An optical isolator of aspect 3 is the optical isolator according to aspect 1 or 2, wherein the absorbing member may have a light attenuation surface that attenuates the reflected return light.

An optical isolator of aspect 4 is the optical isolator according to aspect 3, wherein the light attenuation surface may be disposed to allow absorption of part of the reflected return light and allow multiple reflections of unabsorbed part of the reflected return light thereon.

An optical isolator of aspect 5 is the optical isolator according to aspect 3 or 4, wherein the absorbing member preferably has a plurality of the light attenuation surfaces and the plurality of the light attenuation surfaces are preferably disposed to allow absorption of part of the reflected return light and allow multiple reflections of unabsorbed part of the reflected return light thereon.

An optical isolator of aspect 6 is the optical isolator according to any one of aspects 3 to 5, wherein the absorbing member may include a groove or a bore, an inner wall surface of the groove or the bore in the absorbing member may be the light attenuation surface, and the groove or the bore may have a tapered shape gradually decreasing in width in a direction of travel of the reflected return light.

An optical isolator of aspect 7 is the optical isolator according to any one of aspects 3 to 6, wherein the absorbing member may include a groove or a bore, an inner wall surface of the groove or the bore in the absorbing member may be the light attenuation surface, and the groove or the bore may have a reverse tapered shape gradually increasing in width in a direction of travel of the reflected return light.

An optical isolator of aspect 8 is the optical isolator according to any one of aspects 3 to 7, wherein the absorbing member may include: a component body; and a surface-treated layer that covers at least a portion of the component body and absorbs at least part of the reflected return light, and a surface of the surface-treated layer may be the light attenuation surface.

An optical isolator of aspect 9 is the optical isolator according to aspect 8, wherein the surface-treated layer preferably contains at least one selected from the group consisting of amorphous aluminum oxide, chromium, nickel, and carbon.

An optical isolator of aspect 10 is the optical isolator according to aspect 8 or 9, wherein surface treatment of the surface-treated layer is preferably alumite treatment, plating, vapor deposition or coating, such as spraying or brush coating.

An optical isolator of aspect 11 is the optical isolator according to aspect 1 or 2, wherein the absorbing member may be made of glass.

An optical isolator of aspect 12 is the optical isolator according to aspect 1 or 2, wherein a surface-treated layer may be provided on an inner wall surface of the housing, and the absorbing member may be formed of the surface-treated layer.

A laser irradiation device of aspect 13 in the present invention includes: a light source that emits laser light; and the optical isolator according to any one of aspects 1 to 12.

### [Advantageous Effects of Invention]

The present invention enables provision of an optical isolator and a laser irradiation device using the optical isolator, both of which can reduce scattering of reflected return light in the interior of the housing and thus have excellent reliability.

### [Brief Description of Drawings]

[Fig. 1]

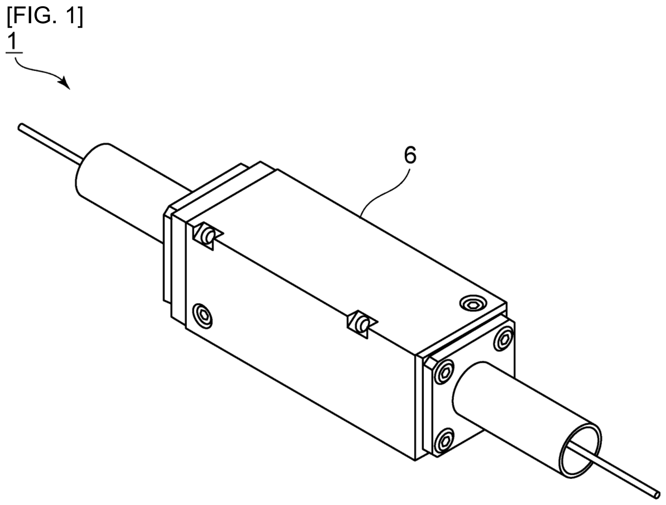

   Fig. 1 is a schematic perspective view showing an optical isolator according to a first embodiment of the present invention.
[Fig. 2]

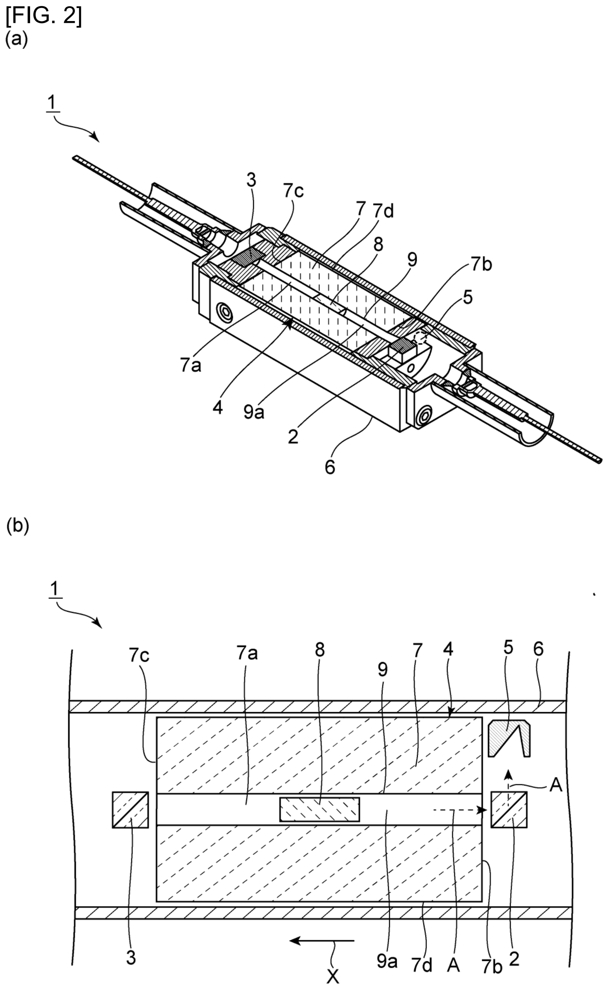

   Fig. 2(a) is a schematic cross-sectional view of the optical isolator according to the first embodiment of the present invention along the direction of an optical axis and Fig. 2(b) is a simplified view of the cross section shown in Fig. 2(a).
[Fig. 3]

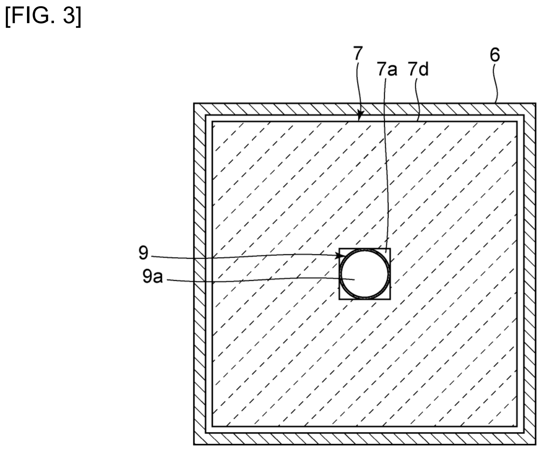

   Fig. 3 is a schematic cross-sectional view of the optical isolator according to the first embodiment of the present invention along a direction orthogonal to the direction of the optical axis.
[Fig. 4]

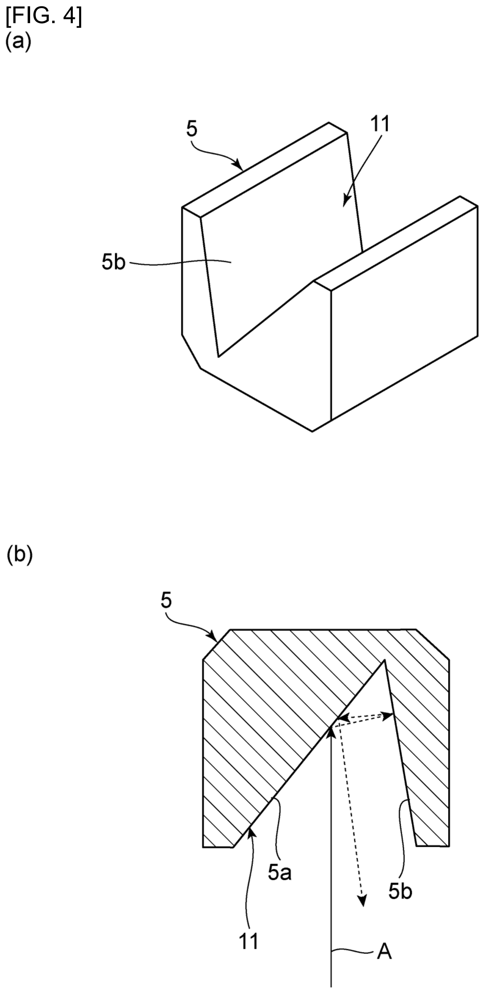

   Fig. 4(a) is a perspective view showing on an enlarged scale an absorbing member of the optical isolator according to the first embodiment of the present invention and Fig. 4(b) is a schematic cross-sectional view of the absorbing member in Fig. 4(a).
[Fig. 5]

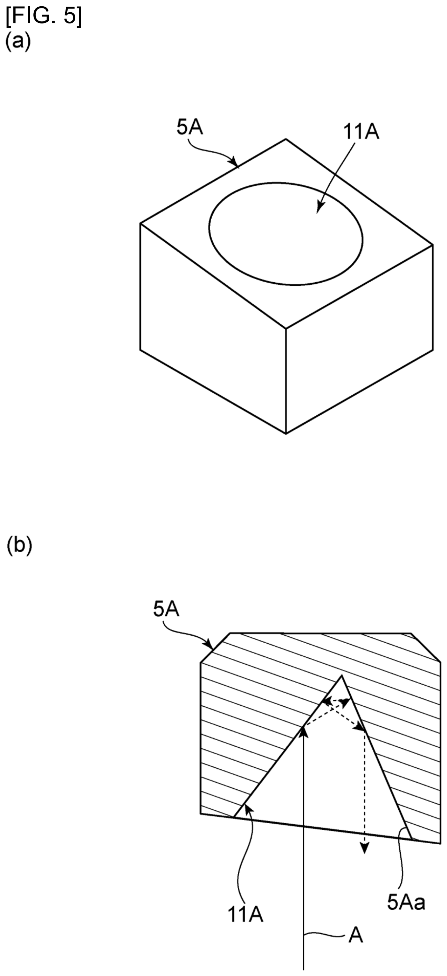

   Fig. 5(a) is a perspective view showing on an enlarged scale an absorbing member of an optical isolator according to a first modification and Fig. 5(b) is a schematic cross-sectional view of the absorbing member in Fig. 5(a).
[Fig. 6]

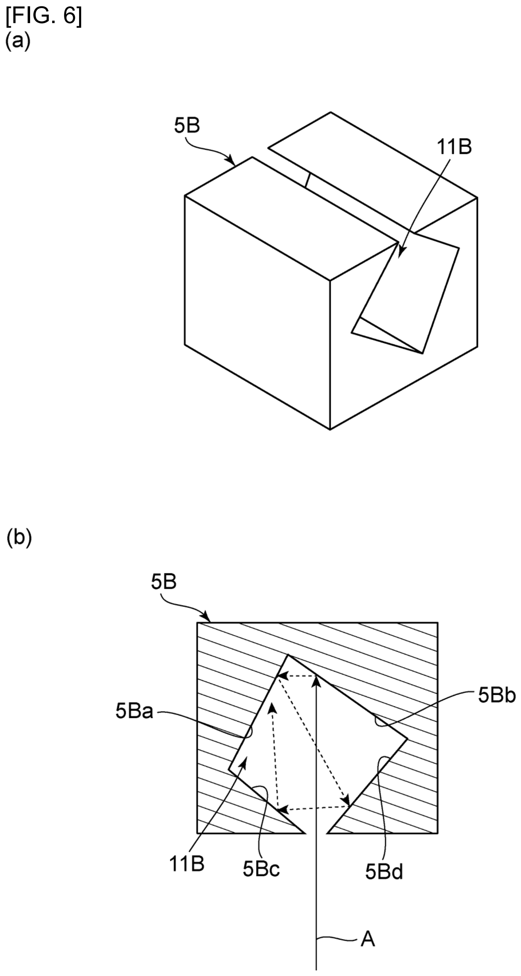

   Fig. 6(a) is a perspective view showing on an enlarged scale an absorbing member of an optical isolator according to a second modification and Fig. 6(b) is a schematic cross-sectional view of the absorbing member in Fig. 6(a).
[Fig. 7]

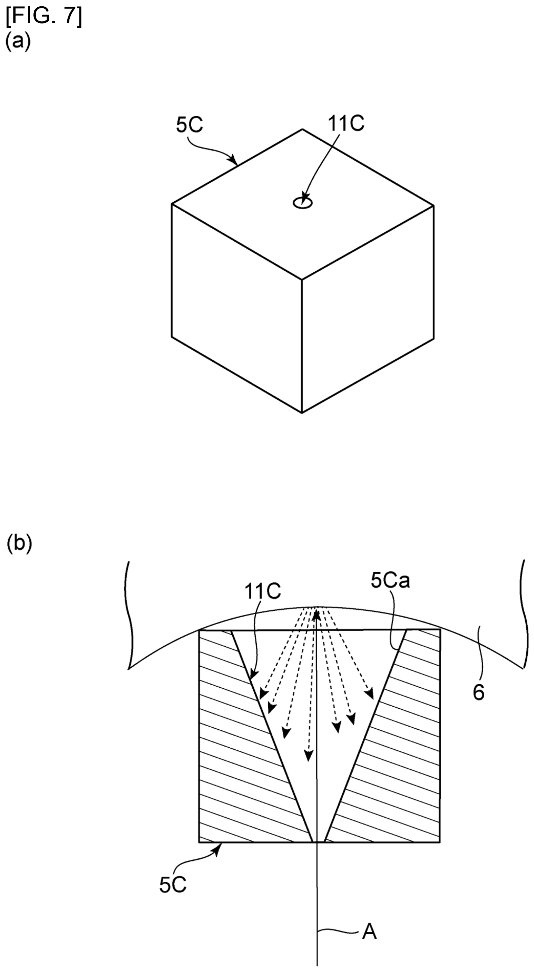

   Fig. 7(a) is a perspective view showing on an enlarged scale an absorbing member of an optical isolator according to a third modification and Fig. 7(b) is a schematic cross-sectional view of the absorbing member in Fig. 7(a).
[Fig. 8]

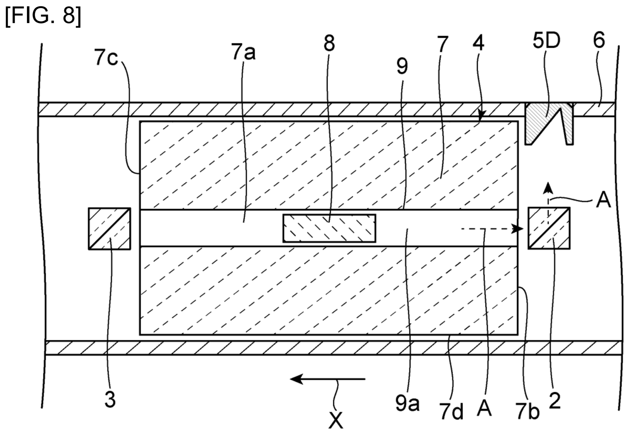

   Fig. 8 is a simplified cross-sectional view of an optical isolator according to a fourth modification along the direction of an optical axis.
[Fig. 9]

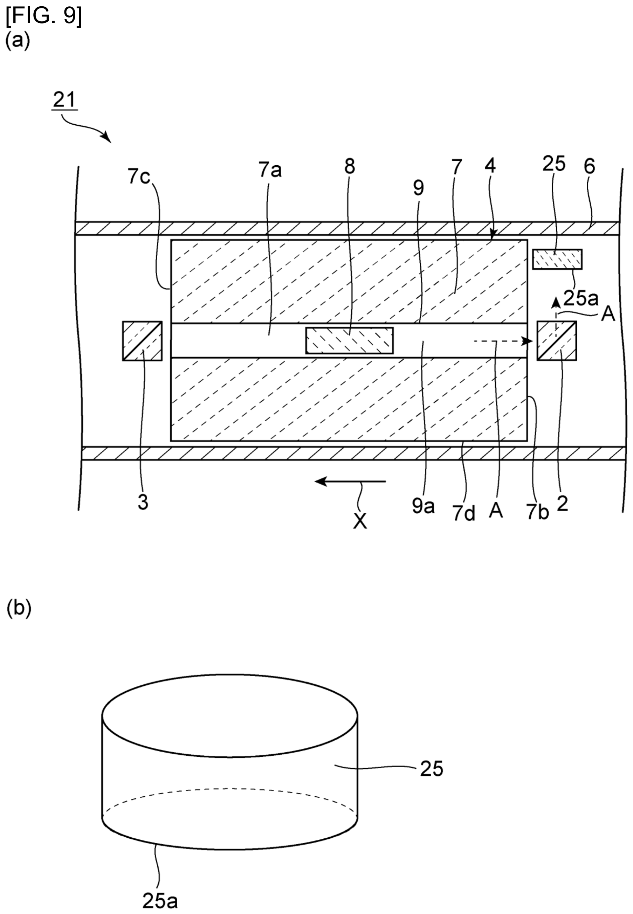

   Fig. 9(a) is a simplified cross-sectional view of an optical isolator according to a second embodiment of the present invention along the direction of an optical axis and Fig. 9(b) is a schematic perspective view showing on an enlarge scale an absorbing member of the optical isolator in Fig. 9(a).
[Fig. 10]

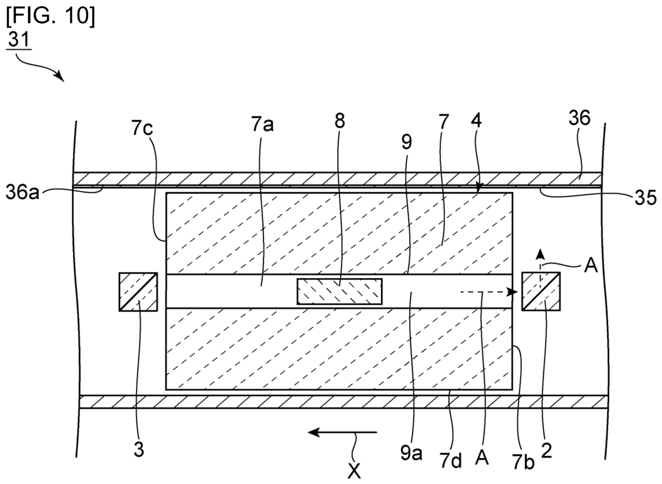

   Fig. 10 is a simplified cross-sectional view of an optical isolator according to a third embodiment of the present invention along the direction of an optical axis.
[Fig. 11]

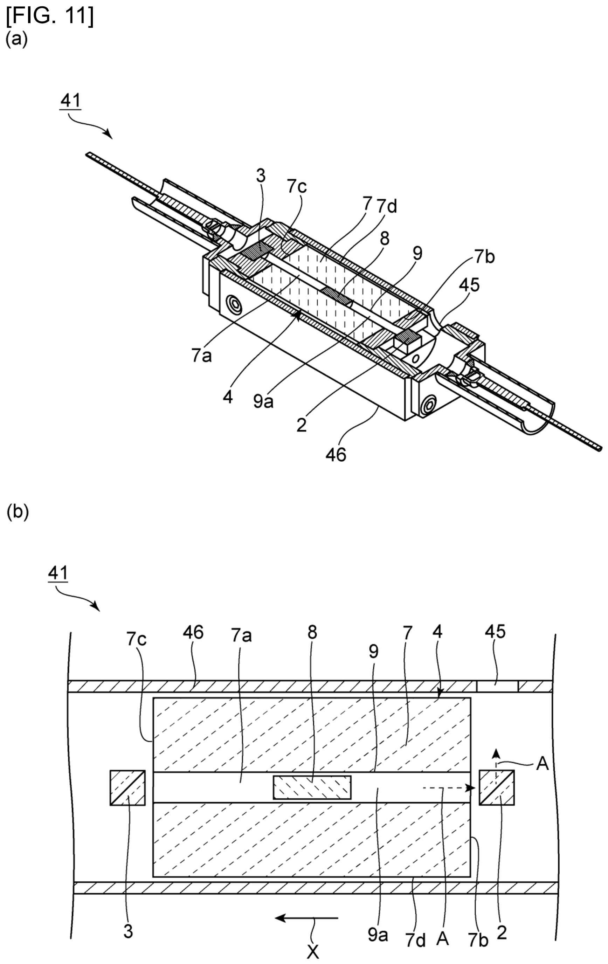

   Fig. 11(a) is a schematic cross-sectional view of an optical isolator according to a fourth embodiment of the present invention along the direction of an optical axis and Fig. 11(b) is a simplified view of the cross section shown in Fig. 11(a).
[Fig. 12]

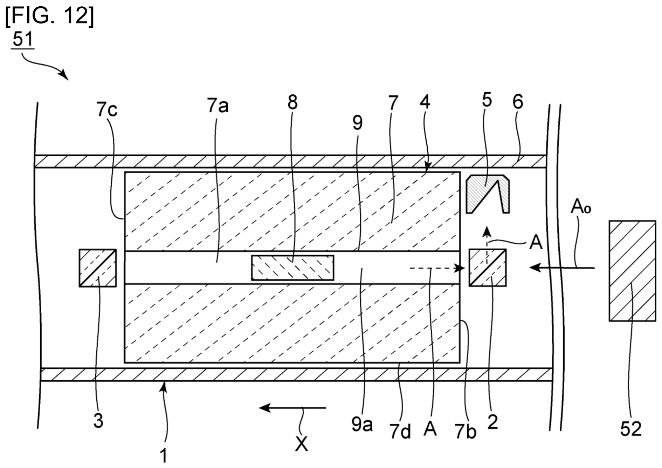

   Fig. 12 is a simplified cross-sectional view of a laser irradiation device according to one embodiment of the present invention along the direction of an optical axis.

### [Description of Embodiments]

Hereinafter, a description will be given of preferred embodiments. However, the following embodiments are merely illustrative and the present invention is not limited to the following embodiments. Throughout the drawings, members having substantially the same functions may be referred to by the same reference characters.

### [Optical Isolator]

### (First Embodiment)

Fig. 1 is a schematic perspective view showing an optical isolator according to a first embodiment of the present invention. Fig. 2(a) is a schematic cross-sectional view of the optical isolator according to the first embodiment of the present invention along the direction of an optical axis. Fig. 2(b) is a simplified view of the cross section shown in Fig. 2(a). Fig. 3 is a schematic cross-sectional view of the optical isolator according to the first embodiment of the present invention along the direction orthogonal to the direction of the optical axis. In Fig. 2(a), for convenience of illustration, an absorbing member 5 is shown in position only and its shape is simplified. The shape of the absorbing member 5 is shown in detail in Fig. 2(b) and Figs. 4(a) and 4(b) to be described later.

As shown in Figs. 2(a) and 2(b), an optical isolator 1 includes a first polarizer 2, a second polarizer 3, a Faraday rotator 4, an absorbing member 5, and a housing 6. The first polarizer 2 is provided on a light incidence side in the direction X of the optical axis. The second polarizer 3 is provided on a light exit side in the direction X of the optical axis. The Faraday rotator 4 is provided between the first polarizer 2 and the second polarizer 3.

The Faraday rotator 4 includes a magnet 7 and a Faraday element 8. The magnet 7 has an angular tube shape. Furthermore, the magnet 7 has a through hole 7a and light passes through the through hole 7a. The direction where light passes through the through hole 7a in the magnet 7 is defined as the direction X of the optical axis. Furthermore, the Faraday element 8 is made of a paramagnetic material capable of transmitting light.

The magnet 7 includes a first end surface 7b, a second end surface 7c, and a side surface 7d. The first end surface 7b and the second end surface 7c are opposed to each other in the direction X of the optical axis. The first end surface 7b is one end surface of the magnet 7 in the direction X of the optical axis. The second end surface 7c is the other end surface of the magnet 7 in the direction X of the optical axis. The side surface 7d is connected to the first end surface 7b and the second end surface 7c. Furthermore, the through hole 7a is open at both the first end surface 7b and the second end surface 7c.

As shown in Fig. 3, the cross-sectional shape of the through hole 7a in the magnet 7 along the direction orthogonal to the direction X of the optical axis is square. The cross-sectional shape of the through hole 7a is not limited to an approximately rectangular shape, including a square as just described, and may be an approximately circular shape, including a circular shape, or other shapes. The shape of the magnet 7 is not limited to an angular tube shape and may be, for example, a cylindrical shape.

A tubular member 9 is provided inside the through hole 7a of the magnet 7. In this embodiment, the tubular member 9 is a metallic pipe. The tubular member 9 has a cylindrical shape. Furthermore, the tubular member 9 has a through hole 9a and light passes through the through hole 9a. The cross-sectional shape of the through hole 9a in the tubular member 9 along the direction orthogonal to the direction X of the optical axis is circular. In this embodiment, SUS304 is used as a material for the tubular member 9. However, the shape and material of the tubular member 9 are not particularly limited.

The Faraday element 8 is disposed inside the through hole 9a of the tubular member 9. However, the tubular member 9 need not necessarily be provided. In this case, it is sufficient that the Faraday element 8 is provided inside the through hole 7a of the magnet 7.

Referring back to Figs. 2(a) and 2(b), the first polarizer 2 is provided on the side of the magnet 7 at which the first end surface 7b is located. The second polarizer 3 is provided on the side of the magnet 7 at which the second end surface 7c is located. The first polarizer 2 and the second polarizer 3 are provided with the Faraday element 8 in between in the direction X of the optical axis and are opposed to each other.

In the optical isolator 1, light enters the first polarizer 2, passes through the Faraday element 8, and exits the second polarizer 3. The first polarizer 2 and the second polarizer 3 have their respective light transmission axes. Light having passed through the first polarizer 2 is converted to linearly polarized light according to the light transmission axis. The Faraday element 8 rotates the plane of the linearly polarized light. The angle of the polarized light plane rotated by the Faraday element 8 is defined as an angle of rotation. The angle of the light transmission axis of the second polarizer 3 to the light transmission axis of the first polarizer 2 is designed to be equal to the angle of rotation.

In this embodiment, both the first polarizer 2 and the second polarizer 3 are polarization beam splitters (PBS). Therefore, P-polarized light or S-polarized light passes through the first polarizer 2 and then enters the Faraday element 8. The second polarizer 3 is disposed to allow P-polarized light or S-polarized light which has entered the Faraday element 8 to pass through the second polarizer 3 in the direction X of the optical axis. However, the type of the first polarizer 2 and the second polarizer 3 is not limited to the PBS. An example of the PBS that can be used is a polarization beam splitter formed of two triangular prisms bonded together through a polarization beam splitting film. For example, glass can be used as a material for the prisms.

A paramagnetic material can be used as the Faraday element 8. A glass material is preferably used as the paramagnetic material. The Faraday element 8 made of a glass material is less likely to cause variations in Verdet constant and reduction in extinction ratio due to defects and so on, which single-crystal materials would have, is less affected by stress from an adhesive material, and therefore can maintain a stable Verdet constant and a high extinction ratio. A paramagnetic material other than a glass material can also be used as the Faraday element 8.

The glass material for use as the Faraday element 8 preferably contains at least one type of rare earth element selected from among Ce, Pr, Nd, Pm, Sm, Eu, Gd, Tb, Dy, Ho, Er, and Tm. Among them, Tb is preferably contained in the glass material. Tb in the glass material is present in a trivalent or tetravalent state, but all of these Tb states are expressed as Tb₂O₃ equivalents herein.

In this embodiment, the first polarizer 2, the second polarizer 3, and the Faraday rotator 4 are provided in the interior of the housing 6. For example, aluminum alloy can be used as a material for the housing 6. However, the material for the housing 6 is not particularly limited.

In this embodiment, light having entered the optical isolator 1 passes through the first polarizer 2, is thus converted to linearly polarized light, and then enters the Faraday element 8. The light having entered the Faraday element 8 is rotated 45° by the Faraday element 8 and then passes through the second polarizer 3. Part of the light having passed through the second polarizer 3 becomes reflected return light A and the reflected return light A then passes through the second polarizer 3 with its polarized light plane inclined by an angle of 45°. The reflected return light A having passed through the second polarizer 3 is rotated another 45° by the Faraday element 8. Thus, the polarized light plane of the reflected return light A becomes an orthogonal polarized light plane inclined 90° with respect to the light transmission axis of the first polarizer 2. Therefore, the reflected return light A cannot pass through the first polarizer 2 and is blocked by the first polarizer 2. In the first polarizer 2, the reflected return light A is reflected and travels in a different direction from the direction X of the optical axis (a direction orthogonal to the direction X of the optical axis in this embodiment). In this manner, the reflected return light A of the laser light can be blocked in the first polarizer 2.

As shown in Fig. 2(b), in the optical isolator 1, the absorbing member 5 is provided in the optical path of the reflected return light A reflected by the first polarizer 2. The absorbing member 5 is a component capable of absorbing at least part of the reflected return light A reflected by the first polarizer 2. In this embodiment, the absorbing member 5 is disposed between the first polarizer 2 and a wall of the housing 6.

Since the optical isolator 1 according to this embodiment has the above-described structure, it can reduce scattering of the reflected return light A in the interior of the housing 6 and therefore has excellent reliability.

Conventionally, in an optical isolator, components including polarizers and a Faraday rotator are used disposed in the interior of a housing. In this case, reflected return light having reached the polarizer on the light entrance surface side reflects at the polarizer on the light entrance surface side and, thus, the reflected return light reflected on this side may scatter in the interior of the housing to have adverse effects on characteristics, such as isolation characteristics, which invites a problem of failure to sufficiently increase the reliability of the optical isolator.

To cope with this, in the optical isolator 1 according to this embodiment, the optical path of the reflected return light A reflected by the first polarizer 2 is provided with the absorbing member 5 capable of absorbing at least part of the reflected return light A. Therefore, the optical isolator 1 can reduce scattering of the reflected return light A and, thus, its characteristics, such as isolation characteristics, can be less likely to suffer adverse effects. Hence, the optical isolator 1 has excellent reliability.

Fig. 4(a) is a perspective view showing on an enlarged scale an absorbing member of the optical isolator according to the first embodiment of the present invention and Fig. 4(b) is a schematic cross-sectional view of the absorbing member in Fig. 4(a).

As shown in Fig. 4(a), the absorbing member 5 in this embodiment has a structure in which an approximately V-shaped groove 11 is proved in a block having an approximately quadrangular prism shape. Although in Fig. 4(a) the absorbing member 5 is shown in an inverted position for the sake of explanation of the shape of the absorbing member 5, the absorbing member 5 is, actually, disposed to face the groove 11 toward the first polarizer 2 as shown in Fig. 2(b).

Furthermore, as shown in Fig. 4(b), the groove 11 in the absorbing member 5 has a tapered shape gradually decreasing in width in a direction of travel of the reflected return light A. Inner wall surfaces 5a, 5b forming the groove 11 are light attenuation surfaces that allow absorption of part of the reflected return light A and allow reflection of unabsorbed part of the reflected return light A thereon.

In this embodiment, the absorbing member 5 includes a component body and a surface-treated layer. The surface-treated layer is a layer that absorbs at least part of the reflected return light A. In this embodiment, the inner wall surfaces 5a, 5b as light attenuation surfaces are formed by covering the component body with the surface-treated layer.

As in this embodiment, the surface-treated layer is preferably provided to cover the component body at least on the inner wall surfaces 5a, 5b. So long as the surface-treated layer can absorb at least part of the reflected return light A, it may cover part of the inner wall surfaces 5a, 5b or cover the whole of the inner wall surfaces 5a, 5b. Furthermore, the surface-treated layer may cover the surface of the component body other than the inner wall surfaces 5a, 5b. Therefore, the surface-treated layer may cover the entire surface of the component body.

Examples of the material for the component body that can be used include an aluminum block and SUS304. The surface-treated layer may contain, for example, amorphous aluminum oxide, chromium, nickel or carbon. The type of surface treatment of the surface-treated layer is not particularly limited and is preferably alumite treatment, plating, vapor deposition or coating, such as spraying or brush coating.

Specifically, the type of the surface-treated layer can be appropriately selected according to the wavelength of laser light to be used. For example, when a black surface-treated layer obtained by alumite treatment is used, the absorptance of the reflected return light A in the visible wavelength range can be increased. The reflectance in the visible wavelength range (400 nm to 650 nm) thereof obtained by alumite treatment is about 3% to about 10%. Furthermore, the black surface-treated layer obtained by alumite treatment normally has a high reflectance in the range of infrared wavelengths longer than the visible wavelengths and is therefore difficult to suitably use in the infrared wavelength range. However, when subjected to matting or like treatment, the layer can be used with the reflectance in the infrared wavelength range reduced. By subjecting the black surface-treated layer to matting or like treatment, the reflectance can be reduced to within a range of 5% to 50% as compared to a normal shiny alumite-treated surface having a reflectance of about 60% at a wavelength of 1030 nm.

In the case of a layer obtained by black surface treatment using chromium plating, electroless nickel plating or the like, the absorptance of the reflected return light A can be increased not only in the visible wavelength range but also in the infrared wavelength range. The reflectance in the visible wavelength range (400 nm to 650 nm) of a layer obtained by chromium plating treatment is about 3% to about 10% and the reflectance in the infrared wavelength range (800 nm to 1400 nm) of the layer is about 3% to about 10%. The reflectance in the visible wavelength range (400 nm to 650 nm) of a layer obtained by electroless nickel plating treatment is about 2% to about 10% and the reflectance in the infrared wavelength range (800 nm to 1400 nm) of the layer is about 4% to about 15%.

The thickness of the surface-treated layer may be, for example, not less than 1 µm and not more than 100 µm.

In this embodiment, part of reflected return light A reflected by the first polarizer 2 is absorbed through the inner wall surface 5a of the absorbing member 5 and unabsorbed part of the reflected return light A reflects on the inner wall surface 5a. Part of the reflected return light A having reflected on the inner wall surface 5a is absorbed through the inner wall surface 5b of the absorbing member 5 and unabsorbed part of the reflected return light A reflects on the inner wall surface 5b. In Fig. 4(b), an example of the path of the reflected return light A reflecting on the inner wall surfaces 5a, 5b is shown by the broken lines.

As just described, in this embodiment, part of the reflected return light A can be absorbed through the inner wall surfaces 5a, 5b and, therefore, the reflected return light A can be attenuated. Hence, by providing the optical isolator 1 with the absorbing member 5, scattering of the reflected return light A in the interior of the housing 6 can be reduced and, thus, the reliability of the optical isolator 1 can be increased.

Although in this embodiment the absorbing member 5 is disposed to allow the reflected return light A to be reflected twice by the inner wall surfaces 5a, 5b, the absorbing member 5 may be disposed to allow the reflected return light A to be reflected three or more times repeatedly by the inner wall surfaces 5a, 5b. From the viewpoint of more certainly attenuating the reflected return light A, the absorbing member 5 is preferably disposed to allow the reflected return light A to be absorbed and reflected repeatedly by the inner wall surfaces 5a, 5b. However, in the present invention, the reflected return light A is sufficient to be absorbed and reflected at least once by the inner wall surfaces 5a, 5b.

### First Modification;

Fig. 5(a) is a perspective view showing on an enlarged scale an absorbing member of an optical isolator according to a first modification and Fig. 5(b) is a schematic cross-sectional view of the absorbing member in Fig. 5(a).

As shown in Figs. 5(a) and 5(b), in an absorbing member 5A in the first modification, a groove 11A is formed by hollowing out an approximately quadrangular prism shaped block in a conical shape. The absorbing member 5A is also disposed at the same location as where the absorbing member 5 is provided in Fig. 2(b), i.e., disposed to face the groove 11A in the absorbing member 5A toward the first polarizer 2.

As shown in Fig. 5(b), the groove 11A in the absorbing member 5A in the first modification also has a tapered shape gradually decreasing in width in the direction of travel of the reflected return light A. Furthermore, an inner wall surface 5Aa forming the groove 11A is a light attenuation surface that allows absorption of part of the reflected return light A and allows reflection of unabsorbed part of the reflected return light A thereon. As for the rest, the first modification is designed in the same way as the first embodiment.

Also in the first modification, part of reflected return light A reflected by the first polarizer 2 is absorbed through the inner wall surface 5Aa of the absorbing member 5A and unabsorbed part of the reflected return light A reflects on the inner wall surface 5Aa. Part of the reflected return light A having reflected on the inner wall surface 5Aa is absorbed through another portion of the inner wall surface 5Aa of the absorbing member 5A and unabsorbed part of the reflected return light A reflects on the other portion of the inner wall surface 5Aa. As just described, also in the first modification, part of the reflected return light A can be absorbed through the inner wall surface 5Aa and, therefore, the reflected return light A can be attenuated. Furthermore, since the inner wall surface 5Aa has a conical shape, light reflected on the inner wall surface 5Aa spreads and can be then applied to and absorbed through a wider area in the inner wall surface 5Aa. Hence, by providing the optical isolator 1 with this absorbing member 5A, scattering of the reflected return light A in the interior of the housing 6 can be reduced and, thus, the reliability of the optical isolator 1 can be increased. Also in Fig. 5(b), an example of the path of the reflected return light A reflecting on the inner wall surface 5Aa is shown by the broken lines. Actually, the reflected return light A is reflected and absorbed in every direction.

### Second Modification;

Fig. 6(a) is a perspective view showing on an enlarged scale an absorbing member of an optical isolator according to a second modification and Fig. 6(b) is a schematic cross-sectional view of the absorbing member in Fig. 6(a).

As shown in Fig. 6(a), in an absorbing member 5B in the second modification, a bore is formed by hollowing out an approximately quadrangular prism shaped block in a different quadrangular prism shape. A portion of the quadrangular prism shaped bore reaches a principal surface of the block, thus forming a groove 11B. The absorbing member 5B is also disposed at the same location as where the absorbing member 5 is provided in Fig. 2(b), i.e., disposed to face the groove 11B in the absorbing member 5B toward the first polarizer 2.

As shown in Fig. 6(b), the groove 11B in the absorbing member 5B in the second modification includes: a portion having a tapered shape gradually decreasing in width in the direction of travel of the reflected return light A; and a portion having a reverse tapered shape gradually increasing in width in the direction of travel of the reflected return light A. Inner wall surfaces 5Ba to 5Bd forming the groove 11B are light attenuation surfaces that allow absorption of part of the reflected return light A and allow reflection of unabsorbed part of the reflected return light A thereon. As for the rest, the second modification is designed in the same way as the first embodiment.

Also in the second modification, part of reflected return light A reflected by the first polarizer 2 is absorbed through the inner wall surface 5Bb of the absorbing member 5B and unabsorbed part of the reflected return light A reflects on the inner wall surface 5Bb. Part of the reflected return light A having reflected on the inner wall surface 5Bb is absorbed through the inner wall surface 5Ba of the absorbing member 5B and unabsorbed part of the reflected return light A reflects on the inner wall surface 5Ba. In this embodiment, the entrance of the groove 11B through which the reflected return light A enters the groove 11B is narrow and, therefore, reflection and absorption are repeated by the inner wall surfaces 5Ba to 5Bd, which enables further attenuation of the reflected return light A. Hence, by providing the optical isolator 1 with this absorbing member 5B, scattering of the reflected return light A in the interior of the housing 6 can be further reduced and, thus, the reliability of the optical isolator 1 can be increased. Also in Fig. 6(b), an example of the path of the reflected return light A reflecting on the inner wall surfaces 5Ba to 5Bd and so on is shown by the broken lines. Actually, the reflected return light A is reflected and absorbed in every direction.

### Third Modification;

Fig. 7(a) is a perspective view showing on an enlarged scale an absorbing member of an optical isolator according to a third modification and Fig. 7(b) is a schematic cross-sectional view of the absorbing member in Fig. 7(a).

As shown in Figs. 7(a), in an absorbing member 5C in the third modification, by hollowing out an approximately quadrangular prism shaped block in a conical shape, a bore 11C is formed to allow the apex of the cone to reach a principal surface of the absorbing member 5C. The absorbing member 5C is also disposed at the same location as where the absorbing member 5 is provided in Fig. 2(b), i.e., disposed to face the bore 11C in the absorbing member 5C (the apex side of the cone) toward the first polarizer 2.

As shown in Fig. 7(b), the bore 11C in the absorbing member 5C in the third modification has a reverse tapered shape gradually increasing in width in the direction of travel of the reflected return light A. Furthermore, an inner wall surface 5Ca forming the bore 11C is a light attenuation surface that allows absorption of part of the reflected return light A and allows reflection of unabsorbed part of the reflected return light A thereon. As for the rest, the third modification is designed in the same way as the first embodiment.

In the third modification, the reflected return light A reflected by the first polarizer 2 passes through the bore 11C, reflects on a wall of the housing 6, and then reaches the inner wall surface 5Ca of the absorbing member 5C. Part of the reflected return light A having reached the inner wall surface 5Ca of the absorbing member 5C is absorbed through the inner wall surface 5Ca and unabsorbed part of the reflected return light A reflects on the inner wall surface 5Ca. Part of the reflected return light A having reflected on the inner wall surface 5Ca is absorbed through another portion of the inner wall surface 5Ca of the absorbing member 5C and unabsorbed part of the reflected return light A reflects on the other portion of the inner wall surface 5Ca. As just described, in this embodiment, part of the reflected return light A can be absorbed through the inner wall surface 5Ca and, therefore, the reflected return light A can be attenuated. Hence, by providing the optical isolator 1 with this absorbing member 5C, scattering of the reflected return light A in the interior of the housing 6 can be reduced and, thus, the reliability of the optical isolator 1 can be increased. As shown in Fig. 7(b), in this embodiment, the wall of the housing 6 on which the reflected return light A is to be reflected is preferably curved. Thus, as shown by the broken lines in Fig. 7(b), the reflected return light A can be allowed to enter the inner wall surface 5Ca from every direction and can be absorbed and reflected by the inner wall surface 5Ca from every direction.

### Fourth Modification;

Fig. 8 is a simplified cross-sectional view of an optical isolator according to a fourth modification along the direction of the optical axis.

As shown in Fig. 8, in the fourth modification of the optical isolator 1, a portion of the wall of the housing 6 is hollowed out and an absorbing member 5D is disposed to fit into the followed-out portion of the housing 6. The absorbing member 5D has the same structure as the absorbing member 5 in the first embodiment. Also as for the rest, the fourth modification is designed in the same way as the first embodiment.

Also in the fourth modification, the optical path of the reflected return light A reflected by the first polarizer 2 is provided with the absorbing member 5D capable of absorbing at least part of the reflected return light A. Therefore, scattering of the reflected return light A in the interior of the housing 6 can be reduced and, thus, the reliability of the optical isolator 1 can be increased.

### (Second Embodiment)

Fig. 9(a) is a simplified cross-sectional view of an optical isolator according to a second embodiment of the present invention along the direction of an optical axis. Fig. 9(b) is a schematic perspective view showing on an enlarged scale an absorbing member of the optical isolator according to the second embodiment of the present invention.

As shown in Figs. 9(a) and 9(b), in an optical isolator 21, an approximately cylindrical absorbing member 25 is disposed in the optical path of reflected return light A reflected by a first polarizer 2. In this embodiment, a principal surface 25a of the cylindrical absorbing member 25 faces the first polarizer 2. Furthermore, the absorbing member 25 is made of glass.

Examples of the glass that can be used glasses having a composition containing iron, copper or so on.

However, the absorbing member 25 may be made of a material other than glass. The material for the absorbing member 25 can be appropriately selected according to the wavelength of laser light to be used.

The absorbing member 25 may be made of, for example, ceramic or a porous material.

As for the rest, the second embodiment is designed in the same way as the first embodiment.

Also in the second embodiment, the optical path of the reflected return light A reflected by the first polarizer 2 is provided with the absorbing member 25 capable of absorbing at least part of the reflected return light A. Therefore, scattering of the reflected return light A in the interior of the housing 6 can be reduced and, thus, the characteristics, such as isolation characteristics, of the optical isolator 21 can be less likely to suffer adverse effects. Hence, the optical isolator 21 has excellent reliability.

### (Third Embodiment)

Fig. 10 is a simplified cross-sectional view of an optical isolator according to a third embodiment of the present invention along the direction of an optical axis.

As shown in Fig. 10, in an optical isolator 31, a surface-treated layer is formed on an inner wall surface 36a of a housing 36. In this embodiment, this surface-treated layer is an absorbing member 35.

The surface-treated layer as the absorbing member 35 may contain, for example, amorphous aluminum oxide, chromium, nickel or carbon. The type of surface treatment of the surface-treated layer is not particularly limited and is preferably alumite treatment, plating, vapor deposition or coating, such as spraying or brush coating.

Specifically, the type of the surface-treated layer can be appropriately selected according to the wavelength of laser light to be used. For example, when a black surface-treated layer obtained by alumite treatment is used, the absorptance of the reflected return light A in the visible wavelength range can be increased. The reflectance in the visible wavelength range (400 nm to 650 nm) thereof obtained by alumite treatment is about 3% to about 10%. Furthermore, the black surface-treated layer obtained by alumite treatment normally has a high reflectance in the range of infrared wavelengths longer than the visible wavelengths and is therefore difficult to suitably use in the infrared wavelength range. However, when subjected to matting or like treatment, the layer may be used with the reflectance in the infrared wavelength range reduced. By subjecting the black surface-treated layer to matting or like treatment, the reflectance can be reduced to within a range of 5% to 50% as compared to a normal shiny alumite-treated surface having a reflectance of about 60% at a wavelength of 1030 nm.

In the case of a layer obtained by black surface treatment using chromium plating, electroless nickel plating or the like, the absorptance of the reflected return light A can be increased not only in the visible wavelength range but also in the infrared wavelength range. The reflectance in the visible wavelength range (400 nm to 650 nm) of a layer obtained by chromium plating treatment is about 3% to about 10% and the reflectance in the infrared wavelength range (800 nm to 1400 nm) of the layer is about 3% to about 10%. The reflectance in the visible wavelength range (400 nm to 650 nm) of a layer obtained by electroless nickel plating treatment is about 2% to about 10% and the reflectance in the infrared wavelength range (800 nm to 1400 nm) of the layer is about 4% to about 15%.

The thickness of the surface-treated layer as the absorbing member 35 may be, for example, not less than 1 µm and not more than 100 µm.

As for the rest, the third embodiment is designed in the same way as the first embodiment.

Also in the third embodiment, the optical path of the reflected return light A reflected by the first polarizer 2 is provided with the absorbing member 35 capable of absorbing at least part of the reflected return light A. Therefore, scattering of the reflected return light A in the interior of the housing 36 can be reduced and, thus, the characteristics, such as isolation characteristics, of the optical isolator 31 can be less likely to suffer adverse effects. Hence, the optical isolator 31 has excellent reliability.

### (Fourth Embodiment)

Fig. 11(a) is a schematic cross-sectional view of an optical isolator according to a fourth embodiment of the present invention along the direction of an optical axis. Fig. 11(b) is a simplified view of the cross section shown in Fig. 11(a).

As shown in Figs. 11(a) and 11(b), in an optical isolator 41, a through hole 45 is provided in a portion of a wall of a housing 46. The through hole 45 is provided to allow at least part of reflected return light A reflected by a first polarizer 2 to pass through it. Therefore, the through hole 45 is provided in the optical path of the reflected return light A.

The shape of the through hole 45 is not particularly limited so long as the through hole 45 can pass at least part of the reflected return light A through it, but may be, for example, approximately circular, approximately rectangular or an elongated hole.

The size of the through hole 45 is not particularly limited, but may be, for example, not less than 1 mm and not more than 8 mm. The through hole 45 may be covered with a transparent material through which the reflected return light A can transmit and an antireflection film may be formed on the transparent material for ease of transmission of the reflected return light A.

As for the rest, the fourth embodiment is designed in the same way as the first embodiment.

In the fourth embodiment, the optical path of the reflected return light A reflected by the first polarizer 2 is provided with the through hole 45 to allow at least part of the reflected return light A to pass through it. Therefore, scattering of the reflected return light A in the interior of the housing 46 can be reduced and, thus, the characteristics, such as isolation characteristics, of the optical isolator 41 are less likely to suffer adverse effects. Hence, the optical isolator 41 has excellent reliability.

### [Laser Irradiation Device]

Fig. 12 is a simplified cross-sectional view of a laser irradiation device according to one embodiment of the present invention along the direction of an optical axis.

As shown in Fig. 12, a laser irradiation device 51 includes the optical isolator 1 and a light source 52. The material for the absorbing member 5 of the optical isolator 1 can be appropriately selected, as described previously, according to the wavelength of laser light A₀ to be emitted from the light source 52.

In the laser irradiation device 51, laser light A₀ emitted from the light source 52 passes through the first polarizer 2, is thus converted to linearly polarized light, and then enters the Faraday element 8. The light having entered the Faraday element 8 is rotated 45° by the Faraday element 8 and then passes through the second polarizer 3. Part of the light having passed through the second polarizer 3 becomes reflected return light A and the reflected return light A then passes through the second polarizer 3 with its polarized light plane inclined by an angle of 45°. The reflected return light A having passed through the second polarizer 3 is rotated another 45° by the Faraday element 8. Thus, the polarized light plane of the reflected return light A becomes an orthogonal polarized light plane inclined 90° with respect to the light transmission axis of the first polarizer 2. Therefore, the reflected return light A cannot pass through the first polarizer 2 and is blocked by the first polarizer 2. In the first polarizer 2, the reflected return light A is reflected and travels in a direction orthogonal to the direction X of the optical axis. Thus, the reflected return light A of the laser light A₀ can be blocked in the first polarizer 2.

Furthermore, in the laser irradiation device 51, at least part of the reflected return light A reflected by the first polarizer 2 is absorbed by the absorbing member 5 and, therefore, the reflected return light A can be attenuated. Hence, by providing the laser irradiation device 51 with this absorbing member 5, scattering of the reflected return light A in the interior of the housing 6 can be reduced and, thus, the characteristics, such as isolation characteristics, of the optical isolator 1 can be less likely to suffer adverse effects. Therefore, the laser irradiation device 51 has excellent reliability.

### [Reference Signs List]

1, 21, 31, 41 ... optical isolator
2 ... first polarizer
3 ... second polarizer
4 ... Faraday rotator
5, 5A, 5B, 5C, 5D, 25, 35 ... absorbing member
5a, 5b, 5Aa, 5Ba, 5Bb, 5Bc, 5Bd, 5Ca, 36a ... inner wall surface
6, 36, 46 ... housing
7 ... magnet
7a, 9a, 45 ... through hole
7b ... first end surface
7c ... second end surface
7d ... side surface
8 ... Faraday element
9 ... tubular member
11, 11A, 11B ... groove
11C ... bore
25a ... principal surface
51 ... laser irradiation device
52 ... light source
A₀ ... laser light
A ... reflected return light
X ... direction of optical axis

## Claims

1. An optical isolator comprising:
a first polarizer provided on a light incidence side in a direction of an optical axis;
a second polarizer provided on a light exit side in the direction of the optical axis;
a Faraday rotator disposed between the first polarizer and the second polarizer; and
a housing containing the first polarizer, the second polarizer, and the Faraday rotator,
wherein the first polarizer is configured that reflected return light transmitted through the second polarizer and the Faraday rotator is reflected in a different direction from the direction of the optical axis, and
an absorbing member that absorbs at least part of the reflected return light is provided in an optical path of the reflected return light having reflected in the different direction from the direction of the optical axis.

2. The optical isolator according to claim 1, wherein the absorbing member is disposed between the first polarizer and a wall of the housing in the optical path of the reflected return light.

3. The optical isolator according to claim 1 or 2, wherein the absorbing member has a light attenuation surface that attenuates the reflected return light.

4. The optical isolator according to claim 3, wherein the light attenuation surface is disposed to allow absorption of part of the reflected return light and allow multiple reflections of unabsorbed part of the reflected return light thereon.

5. The optical isolator according to claim 3, wherein
the absorbing member has a plurality of the light attenuation surfaces, and
the plurality of the light attenuation surfaces are disposed to allow absorption of part of the reflected return light and allow multiple reflections of unabsorbed part of the reflected return light thereon.

6. The optical isolator according to claim 3, wherein
the absorbing member includes a groove or a bore,
an inner wall surface of the groove or the bore in the absorbing member is the light attenuation surface, and
the groove or the bore has a tapered shape gradually decreasing in width in a direction of travel of the reflected return light.

7. The optical isolator according to claim 3, wherein
the absorbing member includes a groove or a bore,
an inner wall surface of the groove or the bore in the absorbing member is the light attenuation surface, and
the groove or the bore has a reverse tapered shape gradually increasing in width in a direction of travel of the reflected return light.

8. The optical isolator according to claim 3, wherein the absorbing member comprises:
a component body; and
a surface-treated layer that covers at least a portion of the component body and absorbs at least part of the reflected return light, and
a surface of the surface-treated layer is the light attenuation surface.

9. The optical isolator according to claim 8, wherein the surface-treated layer contains at least one selected from the group consisting of amorphous aluminum oxide, chromium, nickel, and carbon.

10. The optical isolator according to claim 8, wherein surface treatment of the surface-treated layer is alumite treatment, plating, vapor deposition, spray coating or brush coating.

11. The optical isolator according to claim 1 or 2, wherein the absorbing member is made of glass.

12. The optical isolator according to claim 1 or 2, wherein
a surface-treated layer is provided on an inner wall surface of the housing, and
the absorbing member is formed of the surface-treated layer.

13. A laser irradiation device comprising:
a light source that emits laser light; and
the optical isolator according to claim 1 or 2.
